# EUROPEAN PATENT APPLICATION

(11) **EP 2 889 520 A1**
(43) Date of publication of application: **01.07.2015**
(21) Application number: 13831566.8
(22) Date of filing: 22.08.2013
(51) Int. Cl.: F16K 7/17, F16K 31/06, F16K 31/126

(54) **MOVING IRON CORE ASSEMBLY AND ELECTROMAGNETIC VALVE USING SAME**

(30) Priority: 23.08.2012 CN 201210301827
(71) Applicant: Danfoss (Tianjin) Ltd., Tianjin 301700 (CN)
(72) Inventor: LIU, Cheng, Tianjin 301700 (CN); WANG, Changdong, Tianjin 301700 (CN); QIAO, Jinhong, Tianjin 301700 (CN)
(74) Representative: Knoblauch, Andreas
(86) International application number: PCT/CN2013/082053
(87) International publication number: WO 2014/029348

(57) **Abstract**

A moving iron core assembly for an electromagnetic valve and electromagnetic valve using same, the moving iron core assembly for an electromagnetic valve comprising: a moving iron core (301) provided with a through-hole in the center, the through-hole consisting of an upper through-hole (3011) and a lower through-hole (3012) mutually communicating; a reset spring (304) disposed in the upper through-hole of the moving iron core; and a sealing plug (303) disposed in the lower through-hole of the moving iron core with a clearance, the sealing plug being capable of freely moving vertically in the lower through-hole.

## Description

*The present application claims the priority of the Chinese patent application no.* 201210301827.7 *with invention title "Moving iron core assembly and solenoid valve using same", submitted on August 23, 2012 the entire contents of which are incorporated herein by reference.*

### Technical field

The present invention relates to the field of valve control switches, in particular to a moving iron core assembly and solenoid valve using same.

### Background art

In the majority of solenoid valves in the prior art, the internal armature structure is generally a conventional directly-lifting (or direct-lift) valve structure. That is, a static iron core is fixed at an upper part of a sleeve, and a moving iron core capable of moving up and down is positioned at a lower part of the sleeve. Between the static iron core and moving iron core is provided a return spring, which causes the moving iron core to drive a piston disposed at a bottom part thereof to press down on a valve port, and maintains a certain gap between the moving iron core and the static iron core. The principle of operation is that the magnetic field force generated when a coil is energized is used to attract the moving iron core to move upwards. When moving upwards, the moving iron core needs to overcome a valve port pressure drop force, the return spring force and the moving iron core's own weight in order to open the valve port. With such a structure, the coil has a high power requirement and the gap stroke is small, and it is not possible to provide a solenoid valve with a low cost and low power consumption.

Specifically, in a direct-lift solenoid valve, the coil needs to provide a large attractive force F0, and the coil power and cost need to be increased accordingly, in order to overcome the three forces (F0 > F1 + F2 + F3, valve port pressure drop force F1, return spring force F2 and moving iron core's own weight F3) and thereby open the valve port. Moreover, the gap stroke of a direct-lift valve structure is small, and it is not possible to make a solenoid valve with a small valve body volume (i.e. low cost).

In view of the above, there is certainly a need to provide a solenoid valve capable of reducing coil power and/or increasing the valve opening stroke.

### Content of the invention

An object of the present invention is to resolve at least one aspect of the abovementioned problems and shortcomings of the prior art.

Accordingly, one object of the present invention is to provide a moving iron core assembly for a solenoid valve that is capable of reducing coil power.

Another object of the present invention is to provide a moving iron core assembly for a solenoid valve that is capable of increasing the valve opening stroke of the solenoid valve.

Another object of the present invention is to provide a diaphragm solenoid valve capable of using the abovementioned moving iron core assembly.

In one aspect of the present invention, a moving iron core assembly for a solenoid valve is provided, wherein the moving iron core assembly comprises:
a moving iron core provided with a through-hole in the center, the through-hole comprising an upper through-hole and a lower through-hole in communication with each other;
a return spring disposed in the upper through-hole of the moving iron core;
a sealing plug disposed with a clearance in the lower through-hole of the moving iron core, wherein the sealing plug can shift freely up and down in the lower through-hole.

In addition, in another aspect of the present invention, a direct-lift solenoid valve and a piston solenoid valve using the moving iron core assembly described above are also provided.

### Description of the accompanying drawings

The following description of preferred embodiments in conjunction with the accompanying drawings will make the abovementioned and/or other aspects and advantages of the present invention obvious and easy to understand, wherein:
Fig. 1 is a view of a diaphragm solenoid valve according to an embodiment of the present invention;
Fig. 2 is a partial view of the diaphragm solenoid valve shown in Fig. 1;
Fig. 3 is a view of an alternative structure for the sloping hole shown in Fig. 1;
Fig. 4 is a view of the snap ring shown in Fig. 1;
Fig. 5 is a view of an alternative structure for the pilot valve port member used in the diaphragm solenoid valve of the present invention;
Fig. 6 is an enlarged view of the gas-distributing plate shown in Fig. 1;
Fig. 7 is a view of the tray shown in Fig. 1;
Fig. 8 is a view of a direct-lift solenoid valve according to another embodiment of the present invention; and
Fig. 9 is a view of a piston solenoid valve according to another embodiment of the present invention.

### Particular embodiments

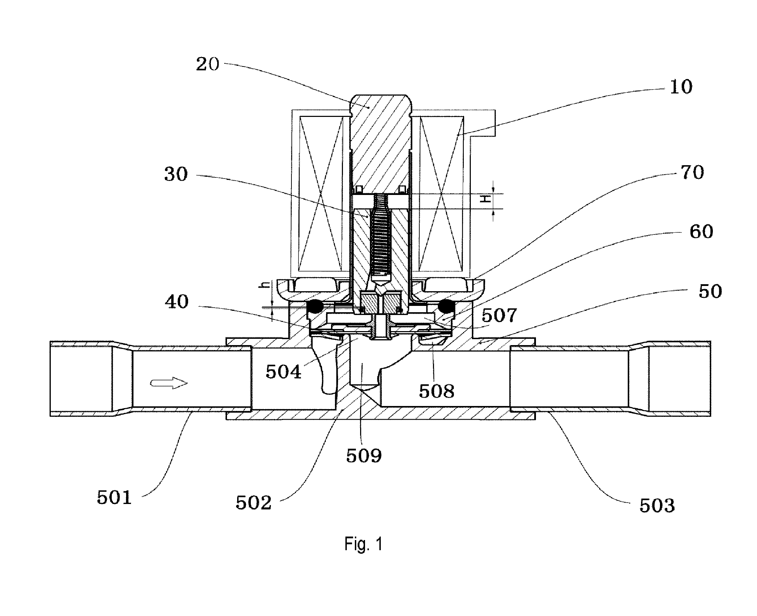

The technical solution of the present invention is explained in further detail below by way of embodiments in conjunction with Figs. 1 - 9. In this description, identical or similar drawing labels indicate indentical or similar components. The following description of embodiments of the present invention with reference to the accompanying drawings is intended to explain the overall inventive concept of the present invention, and should not be interpreted as a limitation of the present invention.

### First embodiment

A diaphragm solenoid valve according to a first embodiment of the present invention is described below with reference to accompanying drawings.

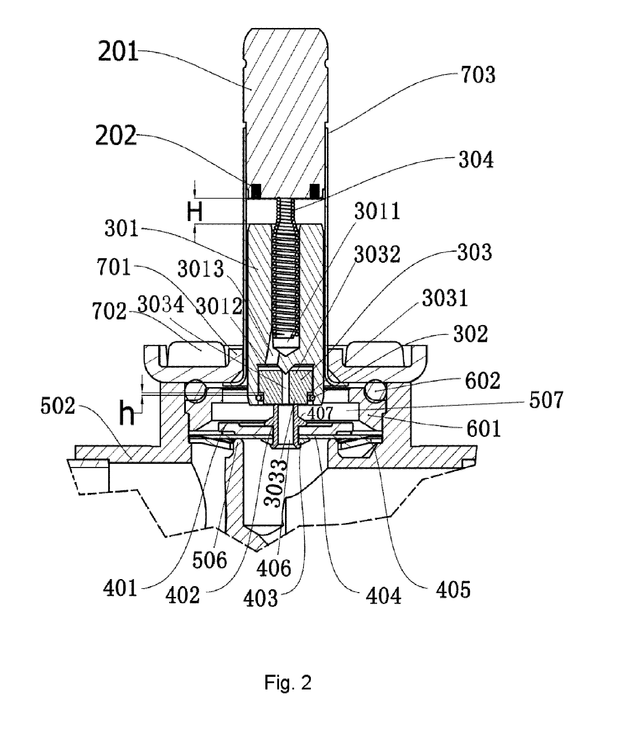

Referring to Figs. 1 and 2, in one embodiment of the present invention, a diaphragm solenoid valve is provided, comprising: a valve body assembly 50 provided with a valve port 504; a diaphragm assembly 40, a central portion of the diaphragm assembly 40 sealing the valve port 504 and a peripheral portion of the diaphragm assembly 40 covering an annular cavity 508 disposed between the valve port 504 and the valve body assembly 50, wherein the annular cavity 508 is in communication with an inlet connecting tube 501 of the solenoid valve, and the diaphragm assembly 40 further comprises a pilot valve port member 402; and a moving iron core assembly 30, comprising a moving iron core 301 and a sealing plug 303 connected with each other, wherein the moving iron core 301 pushes the sealing plug 303 to close a pilot valve port through-hole 406 of the pilot valve port member 402. When the moving iron core 301 drives the sealing plug 303 to move upwards to open the pilot valve port through-hole 406, since the flow rate of fluid from a super-diaphragm cavity 507 above the diaphragm assembly 40 to a valve body outlet cavity 509 below the diaphragm assembly 40 via the pilot valve port through-hole 406 and valve port 504 is greater than a flow rate from the inlet connecting tube 501 of the solenoid valve to the super-diaphragm cavity 507 via a diaphram vent hole or balancing hole in the diaphragm assembly 40 and a gap between the edge thereof and the valve body (giving rise to a difference in flow rates here), and since this difference in flow rates gives rise to an upward pressure difference force between the top and bottom surfaces of the diaphragm assembly 40, this pressure difference force causes the diaphragm assembly 40 to move upwards, thereby opening the valve port 504. It can be understood that the shape of the annular cavity 508 may be set so that the bottom and two sides thereof have a certain slope or curvature.

Referring to Fig. 2, the main components of the solenoid valve, such as a coil 10, a static iron core assembly 20, the moving iron core assembly 30, the diaphragm assembly 40, the valve body assembly 50, a sealing assembly 60 and a valve cover assembly 70, are described in turn below in detail.

The coil 10 is disposed substantially outside a sleeve 703 which surrounds the static iron core assembly 20 and moving iron core assembly 30. The coil 10, when energized, can produce a magnetic force to attract a moving iron core 301 in the moving iron core assembly 30 to move upwards. The moving iron core assembly 30 is disposed in a cavity of the sleeve 703 of the valve cover assembly 70 and can move up and down in the cavity. In general, it is the moving iron core 301 in the moving iron core assembly 30 which moves up and down in the cavity of the sleeve 703.

The static iron core assembly 20 comprises a static iron core 201 and a shading ring 202. An annular groove (not shown) is provided in a bottom part of the static iron core 201, the shading ring 202 being fixed by riveting/pressing in the annular groove. It can be seen from the figure that the annular groove is disposed near the bottom of the static iron core 201, an outer cylindrical surface of a lower part of the static iron core 201 is inserted into an inner cylindrical surface of an upper part of the sleeve 703 by a certain distance, and a top end face of the sleeve 703 is fixed by soldering to the outer cylindrical surface of the lower part of the static iron core 201.

Specifically, as Figs. 1 and 2 show, when the moving iron core 301 and static iron core 201 are not attracted to each other, they are set to have a separating distance or gap H therebetween. When the moving iron core 301 and static iron core 201 are completely attracted to each other, the distance H set therebetween becomes zero, or there is no longer a gap.

The moving iron core assembly 30 comprises the moving iron core 301, a snap ring 302, the sealing plug 303 and a return spring 304. The moving iron core 301 is substantially cylindrical, and through-holes 3011 and 3012 are provided in the center thereof, wherein the through-holes comprise an upper through-hole 3011 and a lower through-hole 3012 in communication with each other. The return spring 304 is disposed in the upper through-hole 3011 of the moving iron core 301. The sealing plug 303 is disposed with a clearance in the lower through-hole 3012 of the moving iron core 301, wherein the sealing plug 303 can shift freely up and down in the lower through-hole 3012.

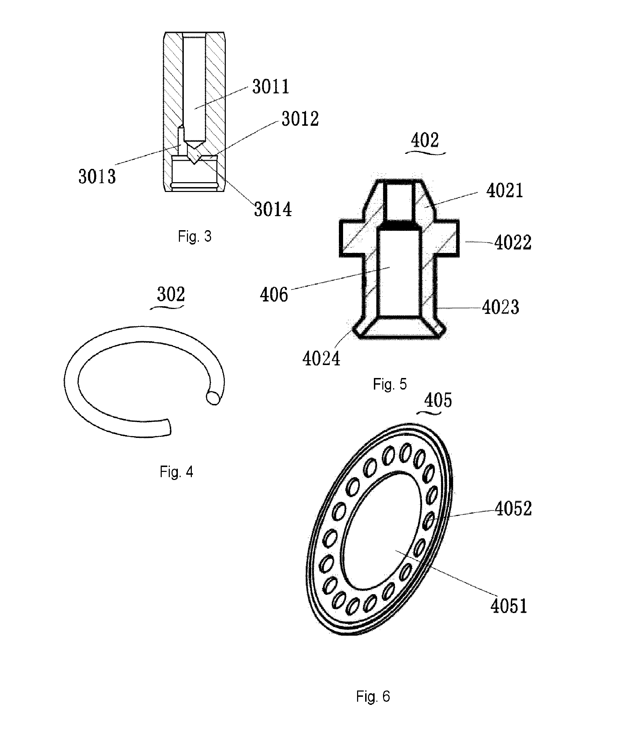

As Fig. 4 shows, a groove (not marked) is provided on the inside of the bottom of the lower through-hole 3012, with the snap ring 302 being installed in the groove. The snap ring 302 is of flexible metal material in the shape of a ring with a portion cut out, and so can be compressed and then installed in the groove of the moving iron core 301. Alternatively, a retaining ring may replace the snap ring 302.

The sealing plug 303 has a top portion 3032 and a bottom portion 3033 which are integrally connected together, with a step face 3031 provided at the junction of the top portion 3032 and the bottom portion 3033. The sealing plug 303 is a substantially cylindrical plastic rod, and the size of the top portion 3032 is greater than the size of the bottom portion 3033. A sealing plug through-hole 3034 is provided in the center of the sealing plug 303, and a support 3014 located between the upper through-hole 3011 and lower through-hole 3012 bears against and seals an upper part of the sealing plug through-hole 3034. The support 3014 is part of the moving iron core and projects into the lower through-hole 3012 from a main body of the moving iron core 301, and in terms of shape is a conical piece or hemispherical piece. One of the functions of the support 3014 is to support, bear against and seal the sealing plug through-hole 3034. The function of the sealing plug through-hole 3034 is as follows: when the moving iron core 301 moves up, the support 3014 leaves the sealing plug through-hole 3034 and this is conducive to discharge of pressure or fluid from the cavity above the sealing plug 304 via an outlet connecting tube 503; at this time, a pressure difference forms between the top and bottom surfaces of the sealing plug 304, to overcome a pressure difference or pressure drop at a pilot valve port.

In the embodiment of the present invention shown in Figs. 1 - 2, the lower through-hole 3012 and upper through-hole 3011 are in communication via a sloping hole 3013. Of course, the lower through-hole 3012 and upper through-hole 3011 may also be connected by a straight hole 3013 as shown in Fig. 3. It can be seen from Fig. 3 that the straight hole 3013 is located on the left side of the support 3014, and has its top end in communication with the upper through-hole 3011 and its bottom end in communication with the lower through-hole 3012.

When the sealing plug 3034 moves down to a first position (i.e. a lowermost position), the snap ring 302 bears against and supports the step face 3031 of the sealing plug in the first position so that it does not move down any further. When the sealing plug 303 is in a second position above the first position (i.e. the position of the sealing plug 303 shown in Fig. 2), a front end of the conical piece 3014 bears against and seals the sealing plug through-hole 3034, preventing it from moving upwards. At this time, there is a first gap h between the step face 3031 of the sealing plug and the snap ring 302, but the solenoid valve is in a closed state, because at this time the bottom end face of the sealing plug 303 seals the pilot valve port through-hole 406 of the pilot valve port member 402 while the sealing plug through-hole 3034 is sealed by the conical piece 3014.

In addition, when the coil 10 is energized, a magnetic force arises between the moving iron core 301 and static iron core 201, this magnetic force attracting the moving iron core 301 to shift upwards. When the moving iron core 301 in the moving iron core assembly 30 and the static iron core 201 are being attracted together, first of all the attractive force between the static iron core 201 and moving iron core 301 causes the moving iron core 301 to move upwards by the first gap h, until the snap ring 302 contacts the step face 3031 of the sealing plug; thereafter, the moving iron core 301 drives the sealing plug 303 to shift upwards together with it under the action of the attractive force, such that the pilot valve port through-hole 406 is opened, and in turn the valve port 504 of the solenoid valve is opened, so that the solenoid valve is in an open state.

The valve body assembly 50 comprises a valve body 502, the inlet connecting tube 501 in communication with the annular cavity 508 and the outlet connecting tube 503 in communication with the valve body outlet cavity 509. A central step 506 is provided in the center of the valve body 502 to form the annular valve port 504. As can be seen from Fig. 1, the annular cavity 508 is a (sealed) cavity formed by the annular valve port 504 and the valve body assembly 50.

The valve cover assembly 70 comprises a valve cover 701, bolts 702 and the sleeve 703, wherein the valve cover 701 is a square cover plate with four threaded holes (not shown in the drawings) provided at the four corners thereof. The valve body 502 and valve cover 701 are fixed by means of the cooperative connection between the bolts 702 and corresponding threaded holes in the valve cover 701 and the valve body 502, for the purpose of forming a cavity surrounding the annular valve port 504 (clearly, once the diaphragm assembly 40 has been set in position, this cavity is divided into the super-diaphragm cavity 507, the annular cavity 508 below the diaphragm and the valve body outlet cavity 509). A valve cover hole (not shown) is provided in the center of the valve cover 701, with a bottom end of the sleeve 703 being inserted in the valve cover hole and fixed in place by soldering. Preferably, the bottom end of the sleeve 703 and the valve cover hole are soldered together by a method such as silver brazing. As is already known by those skilled in the art, a sealed connection is employed between the sleeve 703 and valve cover hole to prevent leakage of fluid or coolant flowing through the solenoid valve. All that is needed is to accomplish a sealed connection therebetween; the method of connection is not limited to methods such as soldering, but may be another method.

The sealing assembly 60 comprises a support plate 601 and a sealing ring 602; the support plate 601 faces the annular cavity 508, being disposed on the periphery of the super-diaphragm cavity 507 in a position above the periphery of the diaphragm assembly 40. The outside of the support plate 601 mates with the valve body 502 to accomplish a connection therewith, and the sealing ring 602 is compressed between the support plate 601 and the valve cover 701. The sealing ring 602 is an annular sealing ring, preferably of a rubber material.

Referring to Fig. 2, the diaphragm assembly 40 is disposed on the central step 506 of the valve body assembly 50, with the diaphragm assembly 40 completely or partially covering the annular cavity 508 formed between the central step 506 and the valve body 502. In other words, the diaphragm assembly 40 is disposed on the central step 506, with the diaphragm assembly 40 covering the annular cavity 508 formed therebelow between the central step 506 and the valve body.

It must be noted that in the present invention, there are two cavities below the diaphragm assembly 40: the annular cavity 508 close to the periphery thereof, and the valve body outlet cavity 509 at the valve port 504.

The diaphragm assembly 40 is disposed on the central step 506, and covers the annular cavity 508 and valve body outlet cavity 509 which are located therebelow.

The diaphragm assembly 40 comprises a gas-distributing plate 405, a diaphragm 404, a washer 403, the pilot valve port member 402 and a tray 401, with the gas-distributing plate 405 being disposed in the annular cavity 508. The diaphragm 404 is disposed on the gas-distributing plate 405, with an edge of the top surface of the diaphragm 404 being at least partially covered by a lower step of the support plate 601. A central portion (of the bottom surface) of the diaphragm 404 seals the valve port 504. As can be seen from Figs. 1 and 2, when the solenoid valve is in a closed state, the bottom end face of the sealing plug 303 in the moving iron core assembly seals or presses and covers the pilot valve port through-hole 406.

Clearly, the edge of the top surface of the diaphragm 404 is generally covered by the support plate 601 with a clearance, so as to allow fluid to flow from the inlet connecting tube 501 into the super-diaphragm cavity 507 above the diaphragm 404.

A lower part of the pilot valve port member 402 passes in sequence through a middle hole of the tray 401, a middle hole of the diaphragm 404, and a middle hole of the washer 403 which is an annular piece of stamped metal; the lower part of the pilot valve port member 402 is then folded outwards round the edge to fix them together. Furthermore, the pilot valve port member 402 covers and presses the tray 401 by means of a middle protruding member 407.

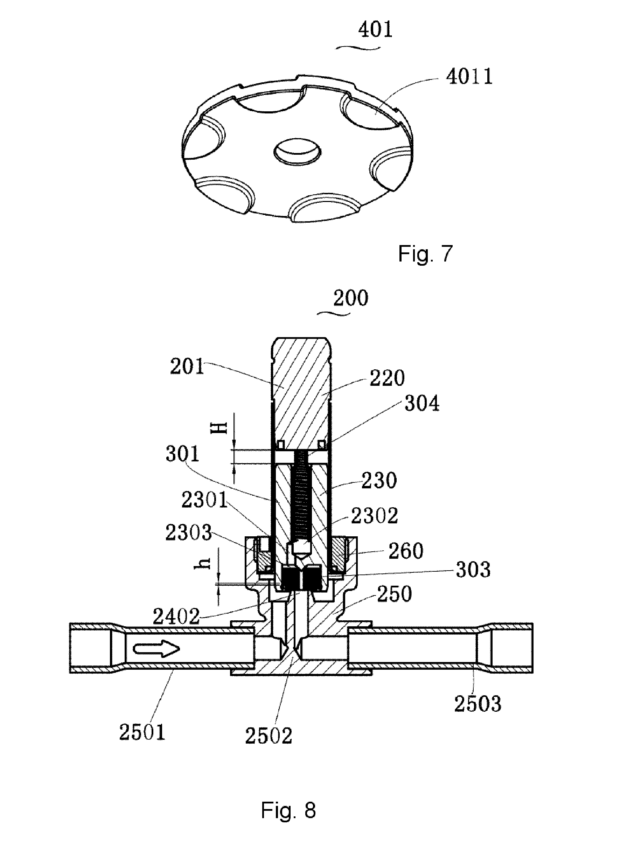

Specifically, as Fig. 7 shows, six substantially semicircular convex-concave structures 4011 may be formed by a stamping process on each plane of the tray 401 at the periphery thereof. As those skilled in the art can understand, another alternative form of the tray 401 is that its peripheral edge is folded upwards.

In the first embodiment of the present invention, the pilot valve port member 402 is a substantially cylindrical member, a pilot valve port through-hole 406 being provided in the center thereof. A protruding piece 407 is provided on the periphery of a middle part thereof, and the bottom thereof is folded outwards round the edge. The protruding piece 407 may be a fin-shaped protruding member or an annular protruding member. Components such as the diaphragm or pilot valve port member are supported by having the bottom of the pilot valve port member 402 folded outwards round the edge, and by the washer and tray etc. which are connected thereto. Specifically, the washer and tray etc. may be connected to the pilot valve port member 402 by soldering or a threaded connection, etc.

Referring to Fig. 5, an alternative form of the pilot valve port member is provided. Specifically, an upper part of the pilot valve port member 402 is a conical step 4021, while a lower part is a two-section cylindrical step. The two-section cylindrical step comprises an upper cylindrical step 4022 and a lower cylindrical step 4023 which are connected together. Inside the pilot valve port member 402 is provided the pilot valve port through-hole 406 which connects the super-diaphragm cavity 507 to the valve body outlet cavity 509. Specifically, in the present invention, the diameter of an upper part of the pilot valve port through-hole 406 is smaller than the diameter of a lower part thereof. It can be understood that the reason why the pilot valve port through-hole 406 is set to have a smaller diameter at the upper part than at the lower part, while the upper part of the pilot valve port member 402 is set to be the conical step 4021, is in order to reduce the weight of the pilot valve port member 402 as much as possible while maintaining the circulation capability of the pilot valve port through-hole. In addition, a larger diameter at the lower part of the pilot valve port through-hole 406 also makes it easier for the outward folded edge 4024 at the bottom thereof to fix components such as the washer, diaphragm and tray in place. It can be understood that the washer 403 may be soldered directly onto the bottom end of the pilot valve port member, in order to allow components such as the diaphragm 404 and pilot valve port member 402 to be supported by the tray 401.

Multiple vent holes or balancing holes are provided at the respective edges of the diaphragm 404 and the gas-distributing plate 405. Specifically, as Fig. 6 shows, multiple vent holes 4052 are provided at intervals round a circle close to the outer circumference of the gas-distributing plate 405; two vent holes (not shown) are provided in the diaphragm 404 at intervals on a circle running round the center of a circle, such that when the gas-distributing plate 405 and the diaphragm 404 are fitted together as shown in Fig. 2, the vent holes of the diaphragm 404 are in communication with vent holes 4052 of the gas-distributing plate 405. Fluid flows into the cavity 507 above the diaphragm assembly 40 through the vent holes 4052 and a gap between an inside edge of the valve body assembly 50 and the edges of the diaphragm 404 and gas-distributing plate 405.

Specifically, in one embodiment of the present invention, the diaphragm 404 is made of a round sheet of plastic, with a middle hole in the middle, and a smaller two or more vent holes (not shown) provided round the circumference thereof close to the edge. Preferably, the diaphragm 404 is made of a polytetrafluoroethylene material, and a glass fiber material may be added in the inside of the diaphragm 404 to enhance its performance.

The washer 403 is a round piece of stamped metal; the gas-distributing plate 405 is a round piece of stamped metal.

Referring to Fig. 6, the gas-distributing plate 405 is an annular stamped piece, with a middle hole 4051 provided in the middle and a number of vent holes 4052 distributed uniformly on an annular surface at the edge. The gas-distributing plate 405 is positioned below the diaphragm 404.

The structure of the solenoid valve of the present invention has been described in detail above. The principles of operation thereof are explained below, to enable those skilled in the art to better understand the disclosed content of the present invention.

### Valve port closed state -> open state

When fluid has entered the valve body 502 from the inlet connecting tube 501 (as shown by the arrow in Fig. 1) and the coil 10 is not energized, the fluid pressures in the super-diaphragm cavity 507 and the annular cavity 508 are equal. Since the return spring 304 is compressed between the static iron core 201 and moving iron core 301, the spring force of the return spring 304 pushes the moving iron core assembly 30 downwards. The support 3014 (at this time the support 3014 seals the through-hole of the sealing plug) causes the sealing plug 303 to press the top end face of the pilot valve port member 402 and move downwards pushing the diaphragm assembly 40, so that the bottom end face of the diaphragm 404 covers the valve port 504, at which time the valve port 504 is in a closed state. The distance or stroke H between the top surface of the moving iron core 301 and the bottom surface of the static iron core 201 is greater than the distance h between the step face 3031 of the sealing plug 303 and the snap ring 302 (to be exact, the top surface of the snap ring 302) (i.e. H > h).

Once the coil 10 is energized, the magnetic force generated by the coil 10 will attract the moving iron core 301 to move upwards against its own weight and the spring force of the return spring 304; since the sealing plug 303 is subject to attraction by a pressure drop at the pilot valve port through-hole (or the inlet/outlet thereof), it temporarily presses and covers the pilot valve port member 402. At first, the moving iron core 301 drives the snap ring 302 to move or shift upwards against the spring force of the return spring 304 and the moving iron core's own weight, until the top surface of the snap ring 302 contacts the step face 3031 of the sealing plug 303 (i.e. h = 0). At this time, the moving iron core 301 is attracted to move upwards and develops a certain acceleration, and by means of the top surface of the snap ring 302 pushes the sealing plug 303 to shift upwards. Being thus subjected to a pushing force, the sealing plug 303 leaves the top surface of the pilot valve port member 402 against the pressure drop force at the valve port 504 (specifically the pilot valve port through-hole). It should be noted that the upward movement of the moving iron core 301 causes the support 3014 to leave the sealing plug through-hole 3034; this is conducive to expulsion of fluid from the cavity above the sealing plug 303 into the outlet connecting tube 503, so that a pressure difference force forms between the top and bottom end faces of the sealing plug 303. This pressure difference force helps to overcome the suction force of the pilot valve port member 402 on the sealing plug 303, making it easier for the sealing plug 303 to move upwards. When the top surface of the moving iron core 301 shifts to the bottom surface of the static iron core 201 (at which time the moving iron core 301 and static iron core 201 are in contact with each other and the force attracting them together reaches its maximum value), the sealing plug 303 has already moved away from the pilot valve port member 402 by a certain distance; at this time the fluid in the super-diaphragm cavity 507 will flow into the valve body outlet cavity 509 through the pilot valve port through-hole 406 (i.e. in the direction of the outlet on the right-hand side of the valve body) and then flow out through the outlet connecting tube 503. At this time, the flow rate of fluid being drained from the super-diaphragm cavity 507 toward the outlet connecting tube 503 causes the pressure in the super-diaphragm cavity 507 to begin to fall. Since the flow rate of fluid flowing into the super-diaphragm cavity 507 from the annular cavity 508 below the diaphragm 404 via the edge of the diaphragm 404 and corresponding vent holes in the diaphragm 404 is less than the flow rate from the super-diaphragm cavity 507 into the valve port 504 via the pilot valve port through-hole 406, the pressure formed in the annular cavity 508 below the diaphragm 404 is higher than the pressure in the super-diaphragm cavity 507. Thus, under the action of the pressure drop force between the cavity 507 above the diaphragm 404 and the annular cavity 508 below, a middle portion of the diaphragm 404 gradually leaves the valve port 504, and arches up to the bottom surface of the support plate 601. Thus the valve port 504 between the inlet connecting tube 501 and the outlet connecting tube 503 is completely open. If the coil 10 remains in an energized state continuously, the pilot valve port through-hole 406 and valve port 504 will remain in a completely open state continuously.

Specifically, when the valve port 504 is opened, the super-diaphragm cavity 507 above the diaphragm assembly is a low-pressure cavity at this time while the annular cavity 508 below the diaphragm assembly is a highpressure cavity on account of being in communication with the inlet connecting tube 501, therefore a pressure difference force acting upwards is formed between the super-diaphragm cavity 507 and the annular cavity 508, so that the pilot valve port member 402 moves upwards, and drives the diaphragm 404 and tray 401 to move upwards together by means of the washer 403 fixed to the pilot valve port member 402, thereby making the middle portion of the diaphragm 404 arch upwards until it bears against the bottom surface of the support plate 601, at which time the valve port 504 between the inlet connecting tube 501 and the outlet connecting tube 503 is completely open.

### Valve port open state -> closed state

Once the supply of electricity to the coil 10 is cut off, the magnetic field force generated by the coil 10 disappears, so the moving iron core 301 will lose the attractive force acting upwards, and at the same time be subjected to the spring force released by the return spring 304, which pushes the moving iron core 301 to shift downwards. The moving iron core 301 then pushes the sealing plug 303 to shift downwards by means of the conical piece 3014 on the moving iron core, until the bottom end face of the sealing plug 303 covers the top surface of the pilot valve port through-hole 406. At this time the fluid in the super-diaphragm cavity 507 has stopped flowing toward the valve body outlet connecting tube 503 via the pilot valve port through-hole 406, and as fluid flows into the super-diaphragm cavity 507 from the annular cavity 508 below the diaphragm via the edge and vent holes of the diaphragm 404, the pressure drop between the super-diaphragm cavity 507 and the annular cavity 508 below the diaphragm will change until the pressures in the super-diaphragm cavity 507 and annular cavity 508 are equal. The arched portion in the middle of the diaphragm 404 will be subjected to the pushing force of the moving iron core 301 via the tray 401 and pilot valve port member 402 and shift downwards, covering the valve port 504, and thereby stopping the flow of fluid from the inlet connecting tube 501 to the outlet connecting tube 503. Finally, the solenoid valve is put into a closed state.

It is clear from the above description that in the first embodiment of the present invention, when the moving iron core 301 is first made to shift upwards, it only needs to overcome its own weight and the spring force of the return spring 304; subsequently, once the moving iron core 301 is moving upwards and has developed a certain acceleration, it drives the corresponding sealing plug 303 to move upwards. Thus, the coil power required by the solenoid valve of the present invention is less than that required by ordinary solenoid valves, while the valve opening stroke is larger, so the cost of the solenoid valve is lower.

### Second embodiment

Referring to Fig. 8, the moving iron core assembly according to the first embodiment of the present invention may also be used in a direct-lift solenoid valve. Fig. 8 merely shows an embodiment of a direct-lift solenoid valve in the art schematically, and it can be understood that those skilled in the art could use the moving iron core assembly of the present invention in direct-lift solenoid valves of other types in the prior art, to realize corresponding functions. Furthermore, it will be clear to those skilled in the art from the detailed description of a diaphragm solenoid valve above that when the moving iron core assembly 230 of the present invention is used in a direct-lift solenoid valve 200, the specific structure and principles of operation thereof are the same as in the first embodiment of the present invention. For the sake of simplicity and convenience, they will not be described in detail again. Thus, the various components of the moving iron core assembly 230 are marked with the same reference labels as in the first embodiment, to avoid confusion. It should be pointed out that in the second embodiment, a straight hole 2301 is used to connect the upper through-hole 2302 and lower through-hole 2303 of the moving iron core 301.

The direct-lift solenoid valve 200 comprises a valve body assembly 250, a static iron core assembly 220, the moving iron core assembly 230 which cooperates with the static iron core assembly 220, and a sealing assembly 260. Specifically, the valve body assembly 250 comprises a valve body 2502, and an inlet connecting tube 2501 and outlet connecting tube 2503 which are in communication with each other via a valve port 2402 at the center of the valve body 2502.

### Valve port closed state -> open state

When fluid has entered the valve body 2502 through the inlet connecting tube 2501 on the left-hand side of the valve body 2502 (as shown by the arrow in Fig. 8), and a coil (not shown) mounted on the periphery of the static iron core 201 and moving iron core 301 is not energized, the compression of the return spring 304 between the static iron core 201 and moving iron core 301 causes the return spring to push the moving iron core 301 to shift downwards, making the sealing plug 303 press the valve port 2402, so that the valve port 2402 is in a closed state.

Once the coil is energized, the magnetic field force generated by the coil will attract the moving iron coil 301 to shift upwards, at which point it needs to overcome its own weight and the spring force of the return spring. Since the sealing plug 303 in the moving iron core assembly 230 is subject to attraction by a pressure drop at the valve port (or inlet/outlet), it is temporarily pressed and covers the valve port 2402. When the moving iron core 301 overcomes its own weight and the spring force to drive the snap ring (not marked) to move upwards, it moves until the top surface of the snap ring contacts the step face of the sealing plug 303 (i.e. the distance to the bottom end face of the static iron core 201 is H - h). At this time, the moving iron core 301 is attracted to shift upwards and has developed an acceleration, and pushes the sealing plug 304 to shift upwards by means of the top surface of the snap ring. When the sealing plug 304 is subjected to the pushing force, it leaves the plane in which the valve port 2402 is located against the valve port pressure drop force. When the top surface of the moving iron core 301 shifts to the bottom surface of the static iron core 201, the sealing plug 304 has already left the valve port 2402, and the valve port 2402 between the inlet connecting tube 2501 and outlet connecting tube 2503 is completely open. If the coil remains in an energized state continuously, the valve port 2402 will remain in a completely open state continuously.

### Valve port open state -> closed state

When the supply of electricity to the coil has been cut off, the magnetic field force generated by the coil disappears, so the moving iron core 301 will lose the attractive force acting upwards, and at the same time be subjected to the action of the release force of the return spring 304 and its own weight, so that the moving iron core 301 shifts downwards. The moving iron core 301 then pushes the sealing plug 303 to shift downwards, until the bottom surface of the sealing plug 303 covers the top surface of the valve port 2402, thereby stopping the flow of fluid from the inlet connecting tube 2501 to the outlet connecting tube 2503. Thereafter, the direct-lift solenoid valve 200 is in a closed state.

### Third embodiment

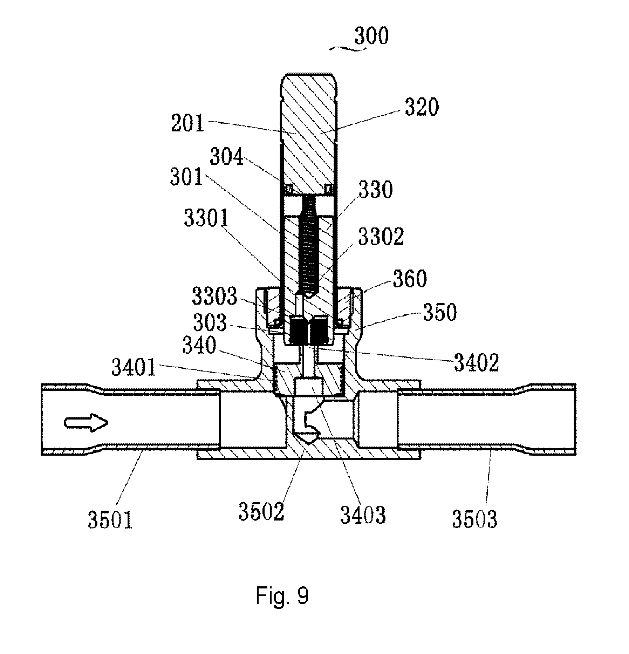

Referring to Fig. 9, the moving iron core assembly according to the first embodiment of the present invention may also be used in a piston solenoid valve 300. Fig. 9 merely shows an embodiment of a piston solenoid valve in the art schematically, and it can be understood that those skilled in the art could use the moving iron core assembly in piston solenoid valves of other types in the prior art, to realize corresponding functions. Furthermore, it will be clear to those skilled in the art from the detailed description of a diaphragm solenoid valve above that when the moving iron core assembly 330 of the present invention is used in a piston solenoid valve 300, the specific structure and principles of operation thereof are the same as in the first embodiment of the present invention. For the sake of simplicity and convenience, they will not be described in detail again. Thus, the various components of the moving iron core assembly 330 are marked with the same reference labels as in the first embodiment, to avoid confusion. It should be pointed out that in the third embodiment, a straight hole 3301 is used to connect the upper through-hole 3302 and lower through-hole 3303 of the moving iron core 301.

The piston solenoid valve 300 comprises a valve body assembly 350, a static iron core assembly 320, the moving iron core assembly 330 which cooperates with the static iron core assembly 320, a piston assembly 340 and a sealing assembly 360. Specifically, the valve body assembly 350 comprises a valve body 3502, and an inlet connecting tube 3501 and outlet connecting tube 3503 which are in communication with each other via a valve port 3403 at the center of the valve body 3502. A through-hole 3402 of the piston assembly 340 is sealed by the bottom end face of the sealing plug 303.

### Valve port closed state -> open state

When fluid has entered the valve body 3502 through the inlet connecting tube 3501 on the left-hand side of the valve body 3502 (as shown by the arrow in Fig. 9) and a coil (not shown) mounted on the periphery of the static iron core 201 and moving iron core 301 is not energized, the fluid pressures in cavities above and below the piston assembly 340 (the cavity below the piston assembly refers to a cavity which is located below the piston assembly 340, excluding the valve port 3403 part, and is in communication with the inlet connecting tube 3501; it should be pointed out that the cavity at the position of the valve port 3403 below the piston assembly 340 is referred to here as the outlet cavity, and is in communication with the outlet connecting tube 3503) are equal. Since the return spring 304 is compressed between the static iron core 201 and moving iron core 301, the spring force of the return spring 304 pushes the moving iron core 301 to shift downwards, causing the sealing plug 303 to press the through-hole 3402 of the piston assembly 340 and shift downwards pushing the piston assembly 340, so that the bottom surface of the piston assembly 340 covers the valve port 3403, and the valve port 3403 is in a closed state.

Once the coil is energized, the magnetic field force generated by the coil attracts the moving iron core 301 to shift upwards, at which time it needs to overcome its own weight and the return spring force. Since the sealing plug 303 is subject to attraction by a pressure drop at the through-hole 3402 (or inlet/outlet) of the piston assembly, it is temporarily pressed and covers the through-hole 3402 of the piston assembly 340. When the moving iron core 301 overcomes the spring force to drive the snap ring to shift upwards, it moves until the top surface of the snap ring contacts the step face of the sealing plug 303 (i.e. the distance to the bottom end face of the static iron core 201 is H - h). At this time, the moving iron core 301 is attracted to shift upwards and has developed an acceleration, and pushes the sealing plug 303 to shift upwards by means of the top surface of the snap ring. When the sealing plug 303 is subjected to the pushing force, it leaves the plane in which it is located against the pressure drop force at the through-hole 3042 of the piston assembly 340. When the top surface of the moving iron core 301 shifts to the bottom surface of the static iron core 201, the sealing plug 303 has already left the through-hole 3402 of the piston assembly 340; at this time, the fluid in the cavity above the piston assembly 340 will flow into the outlet cavity (which is in communication with the outlet connecting tube 3503 on the right-hand side of valve body) through the through-hole 3402 of the piston assembly. The flow rate of the fluid being drained from the cavity above the piston assembly 340 toward the outlet connecting tube 3503 causes the pressure in the cavity above the piston assembly 340 to begin to fall. This is because the flow rate of fluid flowing into the cavity above the piston assembly 340 from the cavity below the piston assembly 340 through gaps between the valve body 3502 and tooth slots 3401 of the piston assembly 340 is less than the flow rate into the valve port 3403 from the cavity above the piston assembly via the through-hole 3402 of the piston assembly 340. The result is that the pressure in the cavity below the piston assembly 340 is higher than the pressure in the cavity above the piston assembly, so that under the action of a pressure drop force between the cavities above and below the piston assembly, the piston assembly 340 gradually begins to leave the valve port 3403, so that the valve port 3402 between the inlet connecting tube 3501 and outlet connecting tube 3503 opens completely. If the coil remains in an energized state continuously, the valve port 3403 will remain in a completely open state continuously.

### Valve port open state -> closed state

Once the supply of electricity to the coil is cut off, the magnetic field force generated by the coil disappears, so the moving iron core 301 will lose the attractive force acting upwards, and at the same time be subjected to the action of its own weight and the release force of the return spring 304, so that the moving iron core 301 shifts downwards. The moving iron core 301 then pushes the sealing plug 303 to shift downwards, until the bottom surface of the sealing plug 303 covers the top surface of the through-hole 3042 of the piston assembly 340. At this time the fluid in the cavity above the piston assembly 340 has stopped flowing toward the valve body outlet connecting tube 3503, and as fluid flows into the cavity above the piston assembly from the cavity below the piston assembly through the gaps between the piston tooth slots 3401 and the valve body 3502, the pressure drop between the cavities above and below the piston assembly 340 will change until the pressures in the cavities above and below the piston assembly 340 are equal. The piston assembly 340 will shift downwards under the pushing force of the moving iron core 301, covering the valve port 3403, and thereby stopping the flow of fluid from the valve body inlet connecting tube 3501 to the outlet connecting tube 3503. Thereafter, the piston solenoid valve is in a closed state.

Although some embodiments of the general inventive concept herein have been shown and explained, those skilled in the art will understand that changes may be made to these embodiments without deviating from the principles and spirit of this general inventive concept. The scope of the present invention is defined by the claims and their equivalents.

## Claims

1. A moving iron core assembly for a solenoid valve, wherein the moving iron core assembly comprises:
a moving iron core provided with a through-hole in the center, the through-hole comprising an upper through-hole and a lower through-hole in communication with each other;
a return spring disposed in the upper through-hole of the moving iron core;
a sealing plug disposed with a clearance in the lower through-hole of the moving iron core, wherein the sealing plug can shift freely up and down in the lower through-hole.

2. The moving iron core assembly for a solenoid valve as claimed in claim 1, **characterized in that**
a groove is provided on the inside of the bottom of the lower through-hole, with a snap ring or retaining ring being installed in the groove.

3. The moving iron core assembly for a solenoid valve as claimed in claim 2, **characterized in that**
the snap ring is of flexible metal material in the shape of a ring with a portion cut out, and so can be compressed and then installed in the groove of the moving iron core; and the lower through-hole and upper through-hole are in communication via a sloping hole or straight hole.

4. The moving iron core assembly for a solenoid valve as claimed in any one of claims 1 - 3, **characterized in that**
the sealing plug has a top portion and a bottom portion which are integrally connected together, with a step face provided at the junction of the top portion and the bottom portion.

5. The moving iron core assembly for a solenoid valve as claimed in claim 4, **characterized in that**
the sealing plug is a cylindrical plastic rod, and the size of the top portion of the sealing plug is greater than the size of the bottom portion.

6. The moving iron core assembly for a solenoid valve as claimed in claim 4, **characterized in that**
a sealing plug through-hole is provided in the center of the sealing plug, and a support located between the upper through-hole and lower through-hole bears against and seals an upper part of the sealing plug through-hole.

7. The moving iron core assembly for a solenoid valve as claimed in claim 6, **characterized in that**
the support is part of the moving iron core and projects into the lower through-hole from a main body of the moving iron core, and in terms of shape is a conical piece or hemispherical piece.

8. The moving iron core assembly for a solenoid valve as claimed in claim 7, **characterized in that**
when the sealing plug moves down to a first position, the snap ring bears against and supports the step face of the sealing plug in the first position so that it does not move down any further.

9. The moving iron core assembly for a solenoid valve as claimed in claim 7, **characterized in that**
when the sealing plug is in a second position above the first position, a front end of the support bears against and seals the sealing plug through-hole, preventing it from moving upwards; at this time, there is a first gap between the step face of the sealing plug and the snap ring, but the solenoid valve is in a closed state, because at this time a bottom end face of the sealing plug seals a pilot valve port through-hole in a pilot valve port member of the solenoid valve while the sealing plug through-hole is sealed by the support.

10. The moving iron core assembly for a solenoid valve as claimed in claim 9, **characterized in that**
when the moving iron core in the moving iron core assembly and a static iron core located above the moving iron core in the solenoid valve are being attracted together, first of all the attractive force between the static iron core and moving iron core causes the moving iron core to move upwards by the first gap, until the snap ring contacts the step face of the sealing plug; thereafter, the moving iron core drives the sealing plug to shift upwards together with it under the action of the attractive force, such that the pilot valve port through-hole is opened, and in turn the valve port of the solenoid valve is opened, so that the solenoid valve is in an open state.

11. A diaphragm solenoid valve comprising:
a valve body assembly provided with a valve port;
a diaphragm assembly, a central portion of the diaphragm assembly sealing the valve port and a peripheral portion of the diaphragm assembly covering an annular cavity disposed between the valve port and the valve body assembly, wherein the annular cavity is in communication with an inlet connecting tube of the solenoid valve, and the diaphragm assembly further comprises a pilot valve port member;
a moving iron core assembly, which is the moving iron core assembly as claimed in any one of claims 1 - 10, wherein the moving iron core pushes the sealing plug to move in order to close a pilot valve port through-hole in the pilot valve port member;
when the moving iron core drives the sealing plug to move upwards to open the pilot valve port through-hole, since the flow rate of fluid from a super-diaphragm cavity above the diaphragm assembly to a valve body outlet cavity below the diaphragm assembly via the pilot valve port through-hole and valve port is greater than a flow rate from the inlet connecting tube of the solenoid valve into the super-diaphragm cavity, a difference in flow rates arises, and since the difference in flow rates gives rise to an upward pressure difference force on the diaphragm assembly, the pressure difference force causes the diaphragm assembly to move upwards, thereby opening the valve port.

12. The diaphragm solenoid valve as claimed in claim 11, **characterized in that**
the valve body assembly comprises a valve body, the inlet connecting tube in communication with the annular cavity and an outlet connecting tube in communication with the valve body outlet cavity, a central step being provided in the center of the valve body to form an annular valve port.

13. The diaphragm solenoid valve as claimed in claim 12, **characterized in that**
the diaphragm solenoid valve further comprises a valve cover assembly comprising a valve cover, bolts and a sleeve, wherein the valve cover is a square cover plate with four threaded holes provided at the four corners thereof; the bolts are inserted into the threaded holes in the valve cover and then into threaded holes in the valve body to fix them together, for the purpose of forming a cavity surrounding the annular valve port; and a valve cover hole is provided in the center of the valve cover, with a bottom end of the sleeve being inserted in the valve cover hole and fixed in place by soldering.

14. The diaphragm solenoid valve as claimed in claim 13, **characterized in that**
the bottom end of the sleeve is fixed to the valve cover hole by silver brazing.

15. The diaphragm solenoid valve as claimed in claim 13, **characterized in that**
it further comprises a sealing assembly comprising a support plate and a sealing ring; the support plate faces the annular cavity, being disposed above the periphery of the diaphragm assembly; the outside of the support plate mates with the valve body, and the sealing ring is compressed between the support plate and the valve cover.

16. The diaphragm solenoid valve as claimed in any one of claims 11 - 15, **characterized in that**
the diaphragm assembly is disposed on the central step, with the diaphragm assembly covering the annular cavity formed therebelow between the central step and the valve body.

17. The diaphragm solenoid valve as claimed in claim 16, **characterized in that**
the diaphragm assembly comprises a gas-distributing plate, a diaphragm, a washer, a pilot valve port member and a tray, wherein the gas-distributing plate is disposed in the annular cavity, the diaphragm is disposed on the gas-distributing plate, with an edge of the top surface of the diaphragm being at least partially covered by a lower step of the support plate, and the bottom surface of the diaphragm seals the valve port.

18. The diaphragm solenoid valve as claimed in claim 17, **characterized in that**
an upper part of the pilot valve port member is a conical step, while a lower part is a two-section cylindrical step comprising an upper cylindrical step and a lower cylindrical step, wherein the size of the upper circular step is larger than the size of the lower cylindrical step, the upper cylindrical step covers and presses the tray, a pilot valve port through-hole which connects the cavity above the diaphragm assembly to the valve body outlet cavity is provided inside the pilot valve port member, and the diameter of an upper part of the pilot valve port through-hole is smaller than the diameter of a lower part thereof.

19. The diaphragm solenoid valve as claimed in claim 17, **characterized in that**
the pilot valve port member is a substantially cylindrical member, a pilot valve port through-hole being provided in the center thereof, a protruding piece being provided on the periphery of a middle part thereof, the protruding piece covering and pressing the tray, and the bottom thereof being folded outwards round the edge.

20. The diaphragm solenoid valve as claimed in claim 18 or 19, **characterized in that**
a lower part of the pilot valve port member passes in sequence through a middle hole of the tray, a middle hole of the diaphragm, and a middle hole of the washer which is an annular piece of stamped metal; the lower part of the pilot valve port member is then folded outwards round the edge to fix them together.

21. The diaphragm solenoid valve as claimed in claim 20, **characterized in that**
vent holes in communication with each other are provided at the respective edges of the diaphragm and the gas-distributing plate, the outer edge of the tray is turned upwards or a convex-concave structure is formed at the periphery by a stamping process, and fluid flows into the cavity above the diaphragm assembly through the vent holes in the diaphragm assembly and/or a gap between and an inside edge of the valve body.

22. The diaphragm solenoid valve as claimed in claim 21, **characterized in that**
when the valve port is opened, the super-diaphragm cavity is a low-pressure cavity at this time while the annular cavity below the diaphragm assembly is a highpressure cavity on account of being in communication with the inlet connecting tube, therefore a pressure difference force acting upwards is formed between the super-diaphragm cavity and the annular cavity, so that the diaphragm assembly drives the pilot valve port member to move upwards, and drives the diaphragm and tray to move upwards together by means of the washer fixed to the pilot valve port member, thereby making a middle portion of the diaphragm arch upwards until it bears against the bottom surface of the support plate, at which time the valve port between the inlet connecting tube and the outlet connecting tube is completely open.

23. The diaphragm solenoid valve as claimed in claim 21, **characterized in that**
when the valve port is being closed, the moving iron core drives the conical piece to move downwards under the action of the moving iron core's own weight and a release force of the return spring, so that the conical piece pushes the sealing plug toward the pilot valve port member until the sealing plug seals the pilot valve port through-hole, at which time fluid in the cavity above the diaphragm assembly stops flowing toward the valve body outlet connecting tube via the pilot valve port through-hole, and as all the fluid in the annular cavity flows into the cavity above the diaphragm via the edge of the diaphragm assembly and/or vent holes, a pressure drop between the super-diaphragm cavity and the annular cavity changes until the pressures in the super-diaphragm cavity and annular cavity are equal, and the arched portion in the middle of the diaphragm is subjected to the action of the pushing force of the moving iron core via the pilot valve port member and tray and thus moves downwards to seal the valve port.

24. The diaphragm solenoid valve as claimed in claim 16, **characterized in that**
the moving iron core assembly is disposed in the sleeve and can move up and down therein; a coil is provided outside the sleeve, and when energized is capable of generating a magnetic force to attract the moving iron core in the moving iron core assembly to move upwards.

25. The diaphragm solenoid valve as claimed in claim 24, **characterized in that**
a static iron core assembly comprising a static iron core and a shading ring is provided in the sleeve; an annular groove is provided in a bottom part of the static iron core, the shading ring being fixed by riveting/pressing in the annular groove; a lower part of the static iron core is inserted into an upper part of the sleeve, and a top end face of the sleeve is fixed by soldering to an outer cylindrical surface of the lower part of the static iron core.

26. A direct-lift solenoid valve, wherein the direct-lift solenoid valve comprises:
a moving iron core assembly, which is the moving iron core assembly as claimed in any one of claims 1 - 10, and the moving iron core in the moving iron core assembly pushes the sealing plug to move in order to close a valve port of the direct-lift solenoid valve.

27. A piston solenoid valve, wherein the piston solenoid valve comprises:
a moving iron core assembly, which is the moving iron core assembly as claimed in any one of claims 1 - 10, and the moving iron core in the moving iron core assembly pushes the sealing plug to move in order to close a through-hole of a piston assembly of the piston solenoid valve, and thereby causes the piston assembly to seal a valve port of the piston solenoid valve.
